# EUROPÄISCHE PATENTSCHRIFT

(11) **EP 2 555 903 B1**
(45) Veröffentlichungstag und Bekanntmachung des Hinweises auf die Patenterteilung: **05.08.2015**
(21) Anmeldenummer: 11713278.7
(22) Anmeldetag: 08.04.2011
(51) Int. Cl.: B23K 20/10

(54) **VERFAHREN ZUM VERSCHWEISSEN VON FLÄCHIGEN BAUTEILEN**
METHOD FOR WELDING TOGETHER TWO PLANAR COMPONENTS
PROCÉDÉ DE SOUDAGE DE PIÈCES PLANES

(30) Priorität: 13.04.2010 DE 102010016415; 09.04.2010 DE 102010016391
(43) Veröffentlichungstag der Anmeldung: 13.02.2013
(73) Patentinhaber: Schunk Sonosystems GmbH, 35435 Wettenberg (DE)
(72) Erfinder: STROH, Dieter, 35435 Wettenberg (DE); STROH, Heiko, 35435 Wettenberg (DE)
(74) Vertreter: Stoffregen, Hans-Herbert
(86) Internationale Anmeldenummer: PCT/EP2011/055527
(87) Internationale Veröffentlichungsnummer: WO 2011/124691

(56) Entgegenhaltungen:
- EP-A1- 1 685 919
- EP-A1- 1 932 651
- WO-A2-2008/148813
- DE-A1- 3 245 355

## Beschreibung

Die Erfindung bezieht sich auf ein Verfahren zum Verschweißen von zumindest zwei zueinander ausgerichteten flächigen metallischen Bauteilen, wie Blechstreifen, mittels Ultraschalls, wobei zum Verschweißen der Bauteile diese zwischen einem Ultraschallschwingungen übertragenden Werkzeug und einem Gegenhalter angeordnet und über diese kraftbeaufschlagt werden.

Um flächige metallische Bauteile mittels Metallultraschallschweißens stoffschlüssig miteinander zu verbinden, werden diese zwischen einer Ultraschallschwingungen übertragenden und als Werkzeug zu bezeichnenden Sonotrode und einem als Amboss oder Gegenelektrode zu bezeichnenden Gegenhalter angeordnet. Die Bauteile werden zwischen der Sonotrode und dem Amboss druckbeaufschlagend fixiert, wobei über die Sonotrode die zum Verschweißen erforderlichen Ultraschallschwingungen übertragen werden. Dabei hat sich herausgestellt, dass durch die Ultraschallschwingungen eine Relativbewegung zwischen den Bauteilen insbesondere dann erfolgt, wenn mehr als zwei flächige Bauteile untereinander verschweißt werden sollen, so dass eine gewünschte Ausrichtung dieser nicht sichergestellt ist; denn die äußeren Bauteile können über die üblicherweise strukturierten Arbeitsflächen von Sonotrode und Amboss fixiert werden, wohingegen das Bauteil bzw. die Bauteile, die zwischen den äußeren angeordnet sind, zu diesen verrutschen können.

Der EP-A-1 685 919, der der Oberbegriff von Anspruch 1 zugrundeliegt, sind eine Vorrichtung und ein Verfahren zum Ultraschallschweißen von flächigen Bauteilen zu entnehmen. Die zum Verschweißen benutzte Sonotrode sowie der Amboss weisen Vorsprünge auf, die sich beim Verschweißen der Materialien in diese eindrücken.

Nach der DE-A-32 45 355 wird ein Blechteil mit einem Draht unter Zuhilfenahme eines Stifts mittels Ultraschallschweißens stoffschlüssig verbunden. Dabei drückt sich der Stift aufgrund des Schweißdrucks und durch die Ultraschallschwingungen bedingt in das Blechteil ein.

Der vorliegenden Erfindung liegt die Aufgabe zugrunde, flächige metallische Bauteile mittels Ultraschallschweißens stoffschlüssig zu verbinden, wobei die Bauteile eine gewünsche Ausrichtung zueinander nach dem Verschweißen aufweisen sollen, die der vor dem Verschweißen entspricht.

Zur Lösung der Aufgabe sieht die Erfindung im Wesentlichen vor, dass die Bauteile vor zum Verschweißen dieser zu applizierenden Ultraschallschwingungen über zumindest einen von dem Werkzeug und/oder dem Gegenhalter über dessen jeweilige Arbeitsfläche vorstehenden Vorsprung bei Kraftbeaufschlagung über diese derart verformt werden, dass eine translatorische und rotatorische Relativbewegung zwischen diesen unterbunden oder weitgehend unterbunden wird, und dass nach der Verformung das Schweißen durchgeführt wird.

Erfindungsgemäß erfolgt ein Fixieren der Bauteile wie Blechstreifen dadurch, dass zunächst eine Verformung dieser zwischen dem Werkzeug - nachstehend auch Sonotrode genannt - und dem Gegenhalter - nachstehend auch Amboss genannt - erfolgt, wodurch sichergestellt ist, dass beim eigentlichen Schweißprozess, bei dem die Sonotrode parallel zu den Bauteilen schwingt, diese nicht relativ zueinander verschoben werden.

Um das Verformen zu erleichtern, kann beim relativen Verstellen von Sonotrode und Amboss aufeinander zu und beim kraftbeaufschlagten Fixieren der Bauteile ein Ultraschallimpuls erzeugt werden, ohne dass dieser zum Schweißvorgang gehört.

Es besteht auch die Möglichkeit, dass ein Vorpositionieren der zu verschweißenden flächigen Bauteile wie Bleche dadurch erfolgt, dass diese zuvor gelocht sind, wobei zum Verschweißen die Löcher fluchtend zueinander ausgerichtet werden und sodann in diese der zumindest eine Vorsprung eingreift, um die Löcher aufzuweiten und somit das mechanische Verformen zum Fixieren der flächigen Bauteile untereinander zu ermöglichen.

Ist nur ein Vorsprung vorgesehen, so muss dieser eine vorzugsweise linienförmige Erstreckung aufweisen, um im gewünschten Umfang sowohl die translatorische als auch die rotatorische Relativbewegung zu unterbinden.

Insbesondere ist jedoch vorgesehen, dass zwei zueinander beabstandete Vorsprünge vorhanden sind, die eine Geometrie z. B. eines Kegels oder einer Pyramide oder eine zylindrische Form oder sonstige Geometrie aufweisen können.

Wird ein zylindrischer Vorsprung benutzt, sollte dieser endseitig eine Spitze oder eine Verjüngung aufweisen, um die mechanische Verformung der flächigen Bauteile zu erleichtern.

Unabhängig hiervon besteht die Möglichkeit, dass die Bauteile über den zumindest einen, vorzugsweise über zwei von dem Werkzeug ausgehende Vorsprünge fixiert werden.

Alternativ können die Bauteile über den zumindest einen, vorzugsweise über zwei von dem Amboss ausgehende Vorsprünge fixiert werden.

Es besteht jedoch auch die Möglichkeit, dass ein Vorsprung von der Sonotrode und ein Vorsprung von dem Amboss ausgehen, die die erforderliche Verformung der Bauteile zum Fixieren dieser zueinander ermöglichen.

In Weiterbildung der Erfindung wird vorgeschlagen, dass dem Vorsprung in dem Werkzeug oder in dem Gegenhalter eine Aussparung in der Arbeitsfläche des Gegenhalters bzw. dem Werkzeug zugeordnet wird. Diese Maßnahmen sind insbesondere dann erforderlich, wenn die Gesamtdicke der zu verschweißenden Bauteile im Vergleich zu der Höhe des Vorsprungs gering ist; denn es muss sichergestellt sein, dass beim Verschweißen der Vorsprung nicht auf eine Arbeitsfläche aufstößt, wodurch anderenfalls ein ordnungsgemäßes Verschweißen nicht möglich ist.

Als Materialien für die flächigen metallischen Bauteile kommen die vom Metallultraschallschweißen bekannten in Frage, vorzugsweise Kupfer, Kupferlegierungen, oberflächenbeschichtete Materialien wie mit Nickel beschichtetes Kupfer oder Kupferlegierungen, Aluminium oder Aluminiumlegierungen.

Die Bleche können unterschiedliche Dicken aufweisen, wobei Blechdicken im Bereich zwischen 0,01 mm und 1 mm bevorzugt sind.

Insbesondere werden mehr als zwei Bauteile verschweißt, ohne dass die zwischen den äußeren Bauteilen angeordneten innenliegenden Bauteile relativ zu den anderen verschoben werden, da die Bauteile untereinander durch das dem Ultraschweißen vorausgehende Verformen quasi verzahnt werden.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung von der Zeichnung zu entnehmenden bevorzugten Ausführungsbeispielen.

Es zeigen:
- Fig. 1: eine erste Ausführungsform eines Werkzeuges und eines Gegenhalters einer Ultraschallweißvorrichtung im Ausschnitt,
- Fig. 2: einen Ausschnitt einer zweiten Ausführungsform einer Ultraschallschweißvorrichtung und
- Fig. 3: ein Detail der Fig. 2.

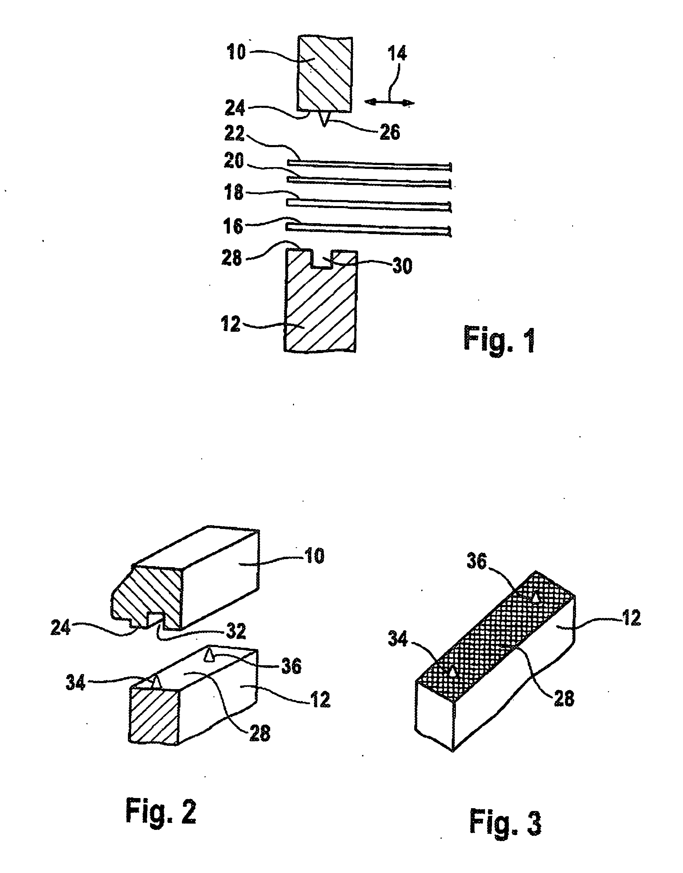

Den Figuren, in denen grundsätzlich für gleiche Elemente gleiche Bezugszeichen verwendet werden, sind Ausschnitte von an und für sich bekannten für das Metallschweißen bestimmten Ultraschallschweißvorrichtungen zu entnehmen. Diese umfassen in bekannter Weise eine Sonotrode 10 mit Sonotrodenkopf und einen diesem zugeordneten Amboss 12. Die Sonotrode 10 kann über einen Booster mit einem Konverter verbunden sein, um die Sonotrode und damit den Sonotrodenkopf in Schwingung zu versetzen. Die Schwingungsrichtung ist durch den Doppelpfeil 14 angedeutet. Ein prinzipieller Aufbau einer Ultraschallschweißvorrichtung mit deren wesentlichen Bestandteilen ist der Fig. 1 der WO-A-2008/148813 zu entnehmen.

Um flächige metallische Bauteile wie Blechstreifen 16, 18, 20, 22 miteinander zu verschweißen, werden diese zwischen dem Amboss 12 und der Sonotrode 10 angeordnet, und zwar zwischen Arbeitsflächen 24, 28 von diesen, die üblicherweise strukturiert sind. Man erkennt an der Prinzipdarstellung, dass die Blechstreifen 16, 18, 20, 22 parallel oder in etwa parallel zur Schwingungsrichtung der Sonotrode 10 angeordnet sind.

Die Blechstreifen 16, 18, 20, 22 können zum Beispiel aus Kupfer, einer Kupferlegierung, einem oberflächenbeschichteten Metall, aus Aluminium oder Aluminiumlegierungen bestehen. Sonstige vom Metallultraschallschweißen her bekannte Materialien kommen gleichfalls in Frage.

Um zu verhindern, dass beim Übertragen der Ultraschallschwingungen die Blechstreifen 16, 18, 20, 22 zueinander verrutschen, da die Sonotrode 10 parallel zu den von den Blechstreifen 16, 18, 20, 22 aufgespannten Ebenen schwingt, ist erfindungsgemäß vorgesehen, dass vor dem eigentlichen Schweißprozess die Blechstreifen 16, 18, 20, 22 nach deren Ausrichtung zueinander zunächst untereinander fixiert werden. Dies erfolgt durch mechanisches Verformen. Hierzu ist nach dem Ausführungsbeispiel der Fig. 1 vorgesehen, dass von der Sonotrode 10 bzw. dessen Schweiß- oder Arbeitsfläche 24 zumindest ein Vorsprung 26 ausgeht.

Die Sonotrode 10 weist vorzugsweise im Schnitt eine Rechteckgeometrie auf, die sich senkrecht zur Sonotrodenlängsachse erstreckt. Die gegenüberliegenden Schmalseiten des eine Quaderform aufweisenden Sonotrodenkopfes sind Arbeitsflächen, von denen Vorsprünge entsprechend der erfindungsgemäßen Lehre ausgehen können.

Beim Absenken der Sonotrode 10 auf die Bleche 16, 18, 20, 22, die auf der Arbeitsfläche 28 des Ambosses 12 aufliegen, werden die Bleche 16, 18, 20, 20 verformt derart, dass ein Verzahnen oder Perforieren untereinander erfolgt und somit eine Relativbewegung ausgeschlossen ist. Dabei wird nicht nur eine translatorische, sondern auch ein rotatorische Relativbewegung unterbunden, so dass im gewünschten Umfang z. B. zueinander ausgerichtete Kanten der Blechstreifen 16, 18, 20, 22 auch nach dem Schweißvorgang die gewünschte definierte Position zueinander aufweisen. Im Ausführungsbeispiel soll sichergestellt werden, dass die vorderen Kanten der verschweißten Blechstreifen 16, 18, 20, 22 bündig zueinander verlaufen.

Um die Relativbewegung zu unterbinden, können im Ausführungsbeispiel nach der Fig. 1 von der Arbeits- oder Schweißfläche 24 der Sonotrode 10 entweder ein linienförmiger Vorsprung 26 oder zumindest zwei zueinander beabstandete gegebenenfalls punktuelle Vorsprünge ausgehen, so dass eine translatorische und rotatorische Relativbewegung nach Verformen der Blechstreifen 16, 18, 20, 22 ausgeschlossen ist.

Wie sich aus der Darstellung der Fig. 1 ergibt, sind dem Vorsprung 26 bzw. den Vorsprüngen der Sonotrode 10, die über deren Arbeitsfläche 24 vorstehen, eine Aussparung 30 bzw. zwei Aussparungen in der Arbeitsfläche 28 des Ambosses 12 zugeordnet, um sicherzustellen, dass beim Verschweißen die Spitze des Vorsprungs 26 nicht auf der Arbeitsfläche 28 aufstößt, wodurch andernfalls ein ordnungsgemäßes Verschweißen nicht möglich wäre. Selbstverständlich können auch mehrere Vorsprünge in eine durchgehende Aussparung eingreifen.

Selbstverständlich ist eine entsprechende Aussparung 30 dann nicht erforderlich, wenn die Gesamtdicke der Bleche hinreichend ist, so dass ein vollständiges Durchdringen des Vorsprungs 26 durch diese beim Verschweißen nicht möglich ist.

Um das Verformen zu erleichtern, besteht die Möglichkeit, dass nach dem Aufsetzen der Sonotrode 10 auf die auf dem Amboss 12 aufliegenden Blechstreifen 16, 18, 20, 22 die Sonotrode 10 einen kurzen Ultraschallimpuls erfährt.

Auch besteht die Möglichkeit, ein Vorpositionieren der Blechstreifen 16, 18, 20, 22 dadurch zu ermöglichen, dass die Blechstreifen 16, 18, 20, 22 gelocht sind, so dass zum Verschweißen die Löcher zueinander fluchtend ausgerichtet werden und auf diese sodann der Vorsprung bzw. die Vorsprünge ausgerichtet werden, die von der Sonotrode 10 bzw. dem Amboss 12 ausgehen.

Das Ausführungsbeispiel der Fig. 2 unterscheidet sich von dem der Fig. 1 dahingehend, dass die Sonotrode 10 bzw. deren Kopf eine von deren Arbeitsfläche 24 ausgehende Aussparung oder Vertiefung 32 aufweist, die positionsmäßig Vorsprüngen 34, 36 zugeordnet sind, die über der Arbeitsfläche 28 des Ambosses 12 vorstehen. Dabei ist es nicht erforderlich, dass in der Arbeitsfläche 24 des Ambosses 12 getrennte Aussparungen 32 für jeden Vorsprung 34, 36 vorgesehen sind. Vielmehr kann auch eine durchgehende Aussparung wie Nut vorgesehen sein. Gleiches gilt für die Ausführungsform der Fig. 1.

Die Fig. 3 verdeutlicht noch einmal, dass die Vorsprünge 34, 36 über deren strukturierten Arbeitsfläche 28 des Ambosses 12 vorstehen.

Alternativ zu den dargestellten Ausführungsformen und der Möglichkeit, dass ein linienförmiger Vorsprung von dem Amboss 12 bzw. der Sonotrode 10 ausgehen kann, besteht auch die Möglichkeit, dass ein Vorsprung über der Arbeitsfläche 28 des Ambosses 12 und ein Vorsprung über der Arbeitsfläche 24 der Sonotrode 10 vorsteht. Hierdurch wird gleichfalls sichergestellt, dass zu verschweißende flächige Bauteile wie die Blechstreifen 16, 18, 20, 22 derart zueinander verformt und damit fixiert werden, dass eine Relativbewegung zueinander beim Ultraschallschweißen nicht erfolgt.

## Patentansprüche

1. Verfahren zum Verschweißen von zumindest zwei zueinander ausgerichteten flächigen metallischen Bauteilen (16, 18, 20, 22), wie Blechstreifen, mittels Ultraschalls, wobei zum Verschweißen die Bauteile zwischen einem Ultraschallschwingungen übertragenden Werkzeug (10) und einem Gegenhalter (12) angeordnet und zwischen diesen durch Druckbeaufschlagung fixiert werden,
**dadurch gekennzeichnet,**
**dass** die Bauteile (16, 18, 20, 22) vor zum Verschweißen derselben zu applizierenden Ultraschallschwingungen über zumindest einen von dem Werkzeug (10) und/oder dem Gegenhalter (12) über deren jeweilige Arbeitsfläche (24, 28) vorstehenden Vorsprung (26, 34, 36) bei Kraftbeaufschlagung über diesen derart verformt werden, dass eine translatorische und eine rotatorische Relativbewegung zwischen diesen unterbunden oder im Wesentlichen unterbunden wird und dass nach der Verformung das Schweißen durchgeführt wird.

2. Verfahren nach Anspruch 1,
**dadurch gekennzeichnet,**
**dass** die Bauteile (16, 18, 20, 22), über zumindest zwei Vorsprünge (34, 36) verformt werden.

3. Verfahren nach Anspruch 1 oder 2,
**dadurch gekennzeichnet,**
**dass** die Bauteile (16, 18, 20, 22) über den zumindest einen, vorzugsweise über zwei von dem Werkzeug (10) ausgehende Vorsprünge (26) verformt werden oder dass die Bauteile über den zumindest einen, vorzugsweise über zwei von dem Gegenhalter (12) ausgehende Vorsprünge (34, 36) verformt werden.

4. Verfahren nach zumindest einem der vorherigen Ansprüche,
**dadurch gekennzeichnet,**
**dass** die Bauteile (16, 18, 20, 22) über zumindest einen von dem Werkzeug (10) und zumindest einen von dem Gegenhalter (12) ausgehenden Vorsprung verformt werden.

5. Verfahren nach zumindest einem der vorherigen Ansprüche,
**dadurch gekennzeichnet,**
**dass** dem Vorsprung (26, 34, 36) in dem Werkzeug (10) oder dem Gegenhalter (12) eine Aussparung (30, 32) in der Arbeitsfläche (24, 28) des Gegenhalters bzw. des Werkzeugs zugeordnet wird.

6. Verfahren nach zumindest einem der vorherigen Ansprüche,
**dadurch gekennzeichnet,**
**dass** zumindest drei, vorzugsweise mehr als drei flächige Bauteile (16, 18, 20, 22) ausgerichtet zueinander verschweißt werden.

7. Verfahren nach zumindest einem der vorherigen Ansprüche,
**dadurch gekennzeichnet,**
**dass** die zu verschweißenden Bauteile (16, 18, 20, 22) zueinander fluchtend ausgerichtete Aussparungen aufweisen, auf die der Vorsprung (26, 34, 36), zum Aufweiten der Aussparungen ausgerichtet wird.

8. Verfahren nach zumindest einem der vorherigen Ansprüche,
**dadurch gekennzeichnet,**
**dass** flächige Bauteile (16, 18, 20, 22) miteinander verschweißt werden, die jeweils Dicken im Bereich zwischen 0,01 mm bis 1 mm aufweisen.

9. Verfahren nach zumindest einem der vorherigen Ansprüche,
**dadurch gekennzeichnet,**
**dass** die zu verschweißenden flächigen Bauteile (16, 18, 20, 22) voneinander abweichende Dicken aufweisen.

10. Verfahren nach zumindest einem der vorherigen Ansprüche,
**dadurch gekennzeichnet,**
**dass** Bauteile (16, 18, 20, 22) über zumindest einen eine linienförmige Verformung hervorrufenden Vorsprung verformt werden.

11. Verfahren nach zumindest einem der vorherigen Ansprüche,
**dadurch gekennzeichnet,**
**dass** die Bauteile (16, 18, 20, 22) über Vorsprünge (26, 34, 36) verformt werden, die eine Geometrie eines Kegels, eines Kegelstumpfs, einer Pyramide, eines Pyramidenstumpfs oder eine zylindrische Geometrie vorzugsweise mit endseitiger Spitze aufweisen..

12. Verfahren nach zumindest einem der vorherigen Ansprüche,
**dadurch gekennzeichnet,**
**dass** die flächigen Bauteile (16, 18, 20, 22) derart zueinander ausgerichtet werden, dass diese zumindest in Bezug auf eine Kante fluchtend zueinander ausgerichtet verschweißt werden.

13. Verfahren nach zumindest einem der vorherigen Ansprüche,
**dadurch gekennzeichnet,**
**dass** als Werkzeug (10) eine Sonotrode verwendet wird, deren die Arbeitsfläche (24) aufweisender Sonotrodenkopf in einer senkrecht zur Schwingungsachse verlaufenden Ebene eine Rechteckgeometrie aufweist.

## Claims

1. Method for welding at least two flat metallic structural components (16, 18, 20, 22) aligned with each other, such as metal strips, using ultrasound, whereby for welding the structural components are arranged between a tool (10) transmitting the ultrasonic oscillations and a holding piece (12) and are fixed between them by pressure application,
**characterized in that**
before welding by means of ultrasonic oscillations to be applied, the structural components (16, 18, 20, 22) are deformed by the exertion of force by at least one projection (26, 34, 36) protruding from the tool (10) and/or the holding piece (12) over the respective work surface (24, 28) in such a way that a translatory and rotatory relative movement between the parts is prevented or essentially prevented, and the welding is done after the deformation.

2. Method according to claim 1,
**characterized in that**
the structural components (16, 18, 20, 22), are deformed by at least two projections (34, 36).

3. Method according to claim 1 or 2,
**characterized in that**
the structural components (16, 18, 20, 22) are deformed by the at least one, preferably by two projections (26) protruding from the tool (10) or that the structural components are deformed by the at least one projection, preferably by two projections (34, 36) protruding from the holding piece (12).

4. Method according to at least one of the previous claims,
**characterized in that**
the structural components (16, 18, 20, 22) are deformed by at least one projection protruding from the tool (10) and at least one projection protruding from the holding piece (12).

5. Method according to at least one of the previous claims,
**characterized in that**
a recess (30, 32) in the work surface (24, 28) of the holding piece and the tool, respectively, is allocated to the projection (26, 34, 36) in the tool (10) or the holding piece (12).

6. Method according to at least one of the previous claims,
**characterized in that**
at least three, preferably more than three flat structural components (16, 18, 20, 22) aligned with each other are welded.

7. Method according to at least one of the previous claims,
**characterized in that**
the structural components (16, 18, 20, 22) to be welded have recesses aligned with each other in a flushed manner, wherein the projection (26, 34, 36) is aligned with the recesses in order to widen the recesses.

8. Method according to at least one of the previous claims,
**characterized in that**
flat structural components (16, 18, 20, 22) are welded to each other, each having thicknesses in the range between 0.01 mm and 1 mm.

9. Method according to at least one of the previous claims,
**characterized in that**
the flat structural components (16, 18, 20, 22) to be welded have thicknesses differing from each other.

10. Method according to at least one of the previous claims,
**characterized in that**
structural components (16, 18, 20, 22) are deformed by at least one projection causing a linear deformation.

11. Method according to at least one of the previous claims,
**characterized in that**
the structural components (16, 18, 20, 22) are deformed by projections (26, 34, 36) that have the geometry of a cone, of a truncated cone, a pyramid, a truncated pyramid, or a cylindrical geometry, preferably with a point at the end.

12. Method according to at least one of the previous claims,
**characterized in that**
the flat structural components (16, 18, 20, 22) are aligned with each other in such a way that they are welded with at least one edge aligned in a flushed manner.

13. Method according to one of the previous claims,
**characterized in that**
a sonotrode is used as a tool (10), the sonotrode head of which comprises the working surface (24) and has a rectangular geometry in the plane running perpendicular to the axis of oscillation.

## Revendications

1. Procédé de soudage par ultrasons d'au moins deux composants (16, 18, 20, 22) métalliques plans, tels que des rubans de tôle, alignés les uns par rapport aux autres, dans lequel pour le soudage, les composants sont disposés entre un outil (10) transmettant des vibrations ultrasonores et une contre-butée (12), et sont fixés entre ceux-ci par application d'une pression,
**caractérisé en ce**
**qu'**avant les vibrations ultrasonores qui doivent être appliquées pour souder les composants, lesdits composants (16, 18, 20, 22) sont déformés par l'intermédiaire d'au moins une saillie (26, 34, 36) dépassant de la surface de travail respective (24, 28) de l'outil (10) et/ou de la contre-butée (12), lorsqu'une force est appliquée sur cette saillie, de telle sorte qu'un mouvement relatif de translation et de rotation entre les composants est empêché ou quasiment empêché, et que le soudage est effectué après la déformation.

2. Procédé selon la revendication 1,
**caractérisé en ce**
**que** les composants (16, 18, 20, 22) sont déformés par l'intermédiaire d'au moins deux saillies (34, 36).

3. Procédé selon la revendication 1 ou 2,
**caractérisé en ce**
**que** les composants (16, 18, 20, 22) sont déformés par l'intermédiaire de l'au moins une, de préférence de deux saillies (26) partant de l'outil (10), ou que les composants sont déformés par l'intermédiaire de l'au moins une, de préférence de deux saillies (34, 36) partant de la contre-butée (12).

4. Procédé selon au moins une des revendications précédentes,
**caractérisé en ce**
**que** les composants (16, 18, 20, 22) sont déformés par l'intermédiaire d'au moins une saillie partant de l'outil (10) et d'au moins une saillie partant de la contre-butée (12).

5. Procédé selon au moins une des revendications précédentes,
**caractérisé en ce**
**qu'**à la saillie (26, 34, 36) dans l'outil (10) ou la contre-butée (12) est associé un évidement (30, 32) dans la surface de travail (24, 28) de la contre-butée ou de l'outil.

6. Procédé selon au moins une des revendications précédentes,
**caractérisé en ce**
**qu'**au moins trois, de préférence plus de trois composants plans (16, 18, 20, 22) sont soudés en étant alignés les uns par rapport aux autres.

7. Procédé selon au moins une des revendications précédentes,
**caractérisé en ce**
**que** les composants (16, 18, 20, 22) à souder présentent des évidements alignés entre eux sur lesquels la saillie (26, 34, 36) est orientée pour élargir les évidements.

8. Procédé selon au moins une des revendications précédentes,
**caractérisé en ce**
**que** sont soudés entre eux des composants plans (16, 18, 20, 22) qui présentent des épaisseurs comprises entre 0,01 mm et 1 mm.

9. Procédé selon au moins une des revendications précédentes,
**caractérisé en ce**
**que** les composants plans (16, 18, 20, 22) à souder présentent des épaisseurs différentes les unes des autres.

10. Procédé selon au moins une des revendications précédentes,
**caractérisé en ce**
**que** des composants (16, 18, 20, 22) sont déformés par l'intermédiaire d'au moins une saillie provoquant une déformation linéaire.

11. Procédé selon au moins une des revendications précédentes,
**caractérisé en ce**
**que** les composants (16, 18, 20, 22) sont déformés par l'intermédiaire de saillies (26, 34, 36) qui présentent une géométrie d'un cône, d'un tronc de cône, d'une pyramide, d'une pyramide tronquée ou d'un cylindre, de préférence se terminant par une pointe.

12. Procédé selon au moins une des revendications précédentes,
**caractérisé en ce**
**que** les composants plans (16, 18, 20, 22) sont disposés les uns par rapport aux autres de manière telle qu'ils sont soudés en étant alignés au moins selon une arête.

13. Procédé selon au moins une des revendications précédentes,
**caractérisé en ce**
**qu'**est utilisée en tant qu'outil (10) une sonotrode dont la surface de travail (24) munie d'une tête de sonotrode présente une géométrie rectangulaire dans un plan s'étendant perpendiculairement à l'axe des vibrations.
